# EUROPÄISCHE PATENTSCHRIFT

(11) **EP 3 354 509 B1**
(45) Veröffentlichungstag und Bekanntmachung des Hinweises auf die Patenterteilung: **18.11.2020**
(21) Anmeldenummer: 18151994.3
(22) Anmeldetag: 17.01.2018
(51) Int. Cl.: B60K 37/02, B60K 25/02, B60K 25/06, G01D 13/10

(54) **ANZEIGEVORRICHTUNG ZUR DARSTELLUNG EINER AKTUELLEN DREHZAHL EINES KRAFTFAHRZEUGS**
DISPLAY DEVICE FOR REPRESENTING THE CURRENT REVOLUTIONS PER MINUTE OF A MOTOR VEHICLE
DISPOSITIF D'AFFICHAGE PERMETTANT DE REPRÉSENTER UNE VITESSE DE ROTATION D'UN VÉHICULE AUTOMOBILE

(30) Priorität: 24.01.2017 DE 102017000592
(43) Veröffentlichungstag der Anmeldung: 01.08.2018
(73) Patentinhaber: MAN Truck & Bus SE, 80995 München (DE)
(72) Erfinder: Mohra, Holger, 80805 München (DE); Arnold, Claus, 93161 Sinzing (DE); Güllich, Johannes, 85229 Markt Indersdorf (DE); Michel, Britta, 81675 München (DE); Zimmermann, Andreas, 80995 München (DE)
(74) Vertreter: v. Bezold & Partner Patentanwälte - PartG mbB

(56) Entgegenhaltungen:
- DE-A1-102010 033 517
- DE-A1-102013 005 823
- GB-A- 2 267 685
- JP-A- H06 153 610

## Beschreibung

Die Erfindung betrifft eine Anzeigevorrichtung zur Darstellung einer aktuellen Drehzahl eines Kraftfahrzeugs. Die Erfindung betrifft ferner ein Kraftfahrzeug, insbesondere ein Nutzfahrzeug, mit einer derartigen Anzeigevorrichtung.

In Fahrzeugen und insbesondere in Kraftfahrzeugen werden Anzeigeinstrumente benutzt, um dem Fahrer aktuelle Werte, das Fahrzeug oder die Umgebung betreffend, darzustellen. Beispielsweise werden so die Geschwindigkeit des Fahrzeugs, die Drehzahl des Motors, die Temperatur des Motors oder der Tankfüllstand dargestellt. Die Darstellung erfolgt häufig mit sogenannten "Instrumententuben". So besitzt ein typischer Drehzahlmesser häufig röhrenförmige Gestalt mit einer Rundskala zur Darstellung des Wertebereichs, den das Instrument anzeigen kann. In der Mitte der Instrumententube befindet sich ein Zeiger, der auf den aktuellen Wert der Rundskala zeigt.

Aus der Offenlegungsschrift DE 196 21 896 A1 ist eine Weiterbildung eines solchen Drehzahlmessers offenbart, der einen Ökonometer aufweist. Der Drehzahlmesser weist ein beleuchtbares Zifferblatt für die Drehzahlanzeige mit farblich unterschiedlich, wie "grün", "gelb" und "rot", gekennzeichneten Drehzahlbereichen auf, wobei die farblich unterschiedliche Anzeige der Drehzahlbereiche mittels aneinandergereihten, Drehzahlfelder bildender LEDs oder kleiner Displays erfolgt.

Die Offenlegungsschrift DE 10 2005 011 824 A1 schlägt vor, eine Skala einer analogen Drehzahlanzeige in einem Hinweisbereich optisch zu verändern, z. B. aufzuhellen. Aus der Offenlegungsschrift DE 10 2004 052 065 A1 ist eine Drehzahlanzeigevorrichtung für ein Kraftfahrzeug mit einer dynamisierten Anzeige zur Drehzahlwarnung bekannt, aufweisend ein analoges Drehzahlanzeigeinstrument und einen Bildschirm. Der Bildschirm und das Drehzahlanzeigeinstrument sind für den Fahrer überlappend sichtbar, wobei die dynamisierte Drehzahlwarnung auf dem Bildschirm innerhalb des Bereichs des Instruments dargestellt ist. Mit anderen Worten, der Fahrer sieht ein analoges Drehzahlanzeigeinstrument und den Bildschirm überlappend als eine optische Einheit. Dadurch können für unterschiedliche Betriebszustände des Fahrzeugs angepasste Drehzahlwarnungen eingeblendet werden. Nachteilig ist jedoch, dass der Platzbedarf und das Erscheinungsbild des analogen Drehzahlanzeigeinstruments nicht veränderbar ist.

GB 2 267 685 A beschreibt eine Nutzerschnittstelle zur Steuerung eines Motors und einem stufenlosen Getriebe, wobei sowohl die (Dreh-)Geschwindigkeit des Motors oder des Nebenabtriebs, als auch die Geschwindigkeit des über das stufenlose Getriebe angetriebenen Fahrzeugs auf einem Digitaldisplay darstellbar sind.

JP H06 153610 A offenbart einen Tachometer eines Nebenabtriebs eines Nutzfahrzeugs, wobei zwei unterschiedliche Ziel-Drehzahlen des Nebenabtriebs in Abhängigkeit der geschalteten Übersetzung auf dem Display angezeigt werden.

DE 10 2010 033517 A1 beschreibt eine Anzeigevorrichtung für ein Fahrzeug, wobei die Skalierung der Skala variabel ist und eine aktuelle Skalierung in Abhängigkeit von dem aktuellen Betriebsparameter erfolgt.

DE 10 2013005823A1 beschreibt Vorrichtung zur Anzeige der Drehzahl eines kraftfahrzeugseitigen Antriebsmotors, wobei mittels wenigstens einen in Abhängigkeit der Drehzahl in unterschiedliche Positionen bewegbaren Zeigers die aktuelle Motordrehzahl und mittels einer weiteren Anzeigeeinrichtung die optische Ausgabe wenigstens einer die Drehzahl des kraftfahrzeugseitigen Antriebsmotors angebenden Drehzahlinformation angezeigt werden kann.

In modernen Fahrzeugen werden zur Darstellung der aktuellen Fahrzeug- bzw. Umgebungswerte oder -bilder sogenannte "Kombi-Instrumente" verwendet. Sie besitzen einen großen Bildschirm, auf dem Bilder und virtuelle Instrumente dargestellt werden können. Dabei werden Anzeigeinstrumente beispielsweise als virtuelle (digitale) Instrumententuben mit einem Skalenring dargestellt.

Display-Darstellungen wie beispielsweise Anzeigen von Fahrerassistenzsystemen, Fahrzeugeinstellungen, Nightview, Navigationsanzeige usw. sind in Kombi-Instrumenten mit Skalenringen auf die Fläche außerhalb der Skalenringe begrenzt. Oftmals wird zur Darstellung die Fläche zwischen den Skalenringen von Tachometer und Drehzahlmesser bzw. Uhr genutzt.

Komplexe Display-Inhalte benötigen meist jedoch mehr Anzeigefläche als zwischen den Skalenringen zur Verfügung steht. Daher bedient man sich einer dynamischen Vergrößerung der Display-Anzeigefläche mittels Ausblendung einer Skalenringanzeige und Verwendung der frei gewordenen Fläche als Display-Anzeigefläche. Dies hat jedoch den Nachteil, dass der dargestellte Drehzahlmesser, Temperaturmesser etc. entfällt.

Eine alternative Lösung zur Vergrößerung der Anzeigefläche besteht darin, dass ein üblicher Skalenring-Tachometer durch ein Bandtachometer ersetzt wird, welches eine geringere Anzeigefläche benötigt.

Nachteilig daran ist, dass sich die grafische Darstellung und damit auch die visuelle Wahrnehmung bzw. Ablesbarkeit des Instruments vollständig ändert, wenn beispielsweise das Nightview-Assistenzsystem aktiviert wird. In diesem Zusammenhang wird in der Offenlegungsschrift DE 10 2010 050 412 A1 vorgeschlagen, eine Skalierung der Rundskala eines Tachometers oder Drehzahlmessers bei Bedarf zu ändern und die Rundskala entsprechend der geänderten Skalierung in einem zweiten Winkelbereich, der kleiner als der erste Winkelbereich ist, darzustellen. Auf diese Weise kann unter Beibehaltung des Rundskalentyps und des Durchmessers bzw. Radius der Rundskala nur durch Veränderung der Skalierung zusätzlicher Platz für weitere Anzeigen geschaffen werden, indem der nicht genutzte Bereich der Rundskala für anderweitige Anzeigen verwendet wird oder teilweise überblendet wird. Dabei ändert sich die visuelle Wahrnehmung der Anzeigevorrichtung kaum.

Es ist eine Aufgabe der Erfindung, eine verbesserte Anzeigevorrichtung zur Darstellung einer aktuellen Drehzahl eines Kraftfahrzeugs bereitzustellen.

Diese Aufgabe wird durch eine Anzeigevorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird eine Anzeigevorrichtung zur Darstellung einer aktuellen Drehzahl, insbesondere Motordrehzahl, eines Kraftfahrzeugs bereitgestellt. Die Anzeigevorrichtung umfasst in an sich bekannter Weise eine Anzeigefläche, insbesondere einen Bildschirm bzw. ein Display, auf dem Bilder und virtuelle Instrumente dargestellt werden können. Die Anzeigevorrichtung umfasst ferner eine mit der Anzeigefläche gekoppelte Steuereinrichtung zum Steuern einer Anzeige von Informationen auf der Anzeigefläche. Die Anzeigevorrichtung kann als Kombi-Instrument ausgeführt sein. Die Anzeigefläche wird unter anderem dazu genutzt, eine Motordrehzahl darzustellen, wobei die aktuelle Motordrehzahl unter Verwendung einer Skala angezeigt wird.

Die Erfindung beruht auf der Feststellung der Erfinder, dass die aus der Praxis bekannten "Kombi-Instrumente" die Möglichkeit bieten, bei Kraftfahrzeugen, die einen Nebenabtrieb aufweisen, die Darstellung der Drehzahl der Drehzahlanzeigevorrichtung in vorteilhafter Weise dynamisch an verschiedene Betriebsmodi des Fahrzeugs anzupassen.

Aus der Praxis ist bekannt, dass Antriebsmotoren von Fahrzeugen, insbesondere Verbrennungsmotoren von Nutzfahrzeugen, einen oder mehrere Nebenabtriebe (engl. power take-off (PTO)), d. h. Möglichkeiten für den Anbau von Nebenaggregaten, aufweisen. Am Nebenabtrieb können Verbraucher wie Pumpen, Kompressoren oder ähnliche Nebenaggregate angeschlossen werden, die dann vom Verbrennungsmotor angetrieben werden. Insbesondere im Nutzfahrzeugbereich sind für bestimmte Anwendungen entsprechende Anbauten bzw. Abtriebe bereits vorgesehen, wie z. B. Klimakompressoren bei Busmotoren oder Kühlfahrzeugen oder große Generatoren zum Betrieb von Verbrauchern im Lastkraftwagen-Aufbau. Die bekannten Nebenabtriebe können als motorabhängige Nebenabtriebe (z. B. Transport-Betonmischer, Flugfeld-Löschfahrzeug) oder als kupplungsabhängige Nebenabtriebe (z. B. Tank- und Silofahrzeuge, Absetzkipper, Gelenkmastbühne) ausgeführt sein. Ein motorabhängiger Nebenabtrieb kann auch während der Fahrt zugeschaltet sein, während bei einem kupplungsabhängigen Nebenabtrieb dessen Zuschaltung nur bei stehendem Fahrzeug möglich ist.

Wenn die Geräte bzw. Nebenaggregate über den Nebenabtrieb bei einem stehenden Fahrzeug angetrieben werden sollen, ist zur Steuerung einfach mit dem Gaspedal oder Handgashebel die Drehzahl des Motors und damit beispielsweise die Zapfwellendrehzahl zu regeln (z. B. bei Seilwinden, Beregnungspumpen). Hierbei besteht der Bedarf, für den Nutzer, z. B. den Fahrer, eine möglichst einfache und genaue Einstellung der Motordrehzahl für den Betrieb der Geräte bzw. Nebenaggregate über den Nebenabtrieb zu ermöglichen.

Erfindungsgemäß ist die Steuereinrichtung der Anzeigevorrichtung daher ausgebildet, die Darstellung der Drehzahl auf der Anzeigefläche in Abhängigkeit von einem Betriebszustand eines Nebenabtriebs des Kraftfahrzeugs zu verändern. Dies bietet den Vorteil, dass die Drehzahlanzeige jeweils optimal an unterschiedliche Betriebsmodi des Fahrzeugs angepasst werden kann, um den unterschiedlichen Anforderungen verschiedener Betriebsmodi Rechnung zu tragen und dadurch die Bedienbarkeit des Kraftfahrzeugs zu verbessern.

Eine besonders vorteilhafte Ausgestaltungsform der Erfindung sieht hierbei vor, dass die Steuereinrichtung ausgebildet ist, die Darstellung der Drehzahl auf der Anzeigefläche zu verändern, wenn der Nebenabtrieb aktiviert wird, beispielsweise zu- oder eingeschaltet wird, oder der Motor im Standbetrieb betrieben wird. Insbesondere kann die Darstellung der Drehzahlanzeige bei einem aktivierten Nebenabtrieb so angepasst werden, dass die für den Nebenabtrieb relevanten Drehzahlbereiche besonders gut ablesbar und einstellbar sind.

Beispielsweise kann die Steuereinrichtung ausgebildet sein, bei aktiviertem Nebenabtrieb die Skalierung einer Skala zur Anzeige der aktuellen Drehzahl, insbesondere in Abhängigkeit von einem Betriebszustand des Nebenabtriebs, zu verändern, insbesondere derart, dass ein Solldrehzahlbereich des Nebenabtriebs bei aktiviertem Nebenabtrieb vergrößert dargestellt ist. Dies bietet den Vorzug, dass der für den Nebenabtrieb relevante Drehzahlbereich, der in der Regel wesentlich kleiner ist als der im normalen Fahrbetrieb auftretende Drehzahlbereich, besser abgelesen, überwacht und vom Fahrer eingestellt werden kann. Ein Solldrehzahlbereich des Nebenabtriebs kann ein Drehzahlbereich sein, in dem der Nebenabtrieb aus Gründen der Betriebssicherheit, aus Wirkungsgrads- bzw. Effizienzgründen betrieben werden soll, und/oder kann ein Drehzahlbereich sein, in dem der Nebenabtrieb typischerweise betrieben wird. Die Veränderung der Skala kann auch grafisch dargestellt werden, insbesondere durch eine Animation, die den Übergang von der Skala, die bei nicht-aktiviertem Nebenabtrieb angezeigt wird, zu der veränderten Skala, die bei aktiviertem Nebenabtrieb dargestellt wird, grafisch animiert. Dadurch erhält der Nutzer automatisch einen Hinweis, dass sich die Skala geändert hat.

Gemäß der Erfindung ist die Steuereinrichtung ausgebildet, bei aktiviertem Nebenabtrieb einen ersten Teilbereich einer Skala zur Anzeige der aktuellen Drehzahl, der einem vorbestimmten Solldrehzahlbereich für den Nebenabtrieb entspricht, visuell hervorgehoben darzustellen. Dies bietet den Vorzug, dass der für den Betrieb des Nebenabtriebs relevante Drehzahlbereich vom Fahrer sofort erkannt wird und die Drehzahl des Nebenabtriebs besser überwacht und eingestellt werden kann.

Eine besonders vorteilhafte Variante dieser Ausführungsform sieht vor, dass dieser erste Teilbereich dadurch hervorgehoben dargestellt wird, dass ein zweiter Teilbereich der Skala, der nicht dem vorbestimmten Solldrehzahlbereich für den Nebenabtrieb entspricht, ausgeblendet oder abgedunkelt wird. Alternativ oder zusätzlich kann der erste Teilbereich dadurch hervorgehoben dargestellt werden, dass er im Vergleich zum zweiten Teilbereich heller und/oder in einer anderen Farbe auf der Anzeigefläche dargestellt wird.

Ferner besteht die Möglichkeit, dass die Steuereinrichtung ausgebildet ist, bei aktiviertem Nebenabtrieb einen Zieldrehzahlwert für den Nebenabtrieb hervorgehoben darzustellen. Der Zieldrehzahlwert für den Nebenabtrieb stellt einen vorgebbaren Zielwert dar zum Betrieb des Nebenabtriebs, der durch die hervorgehobene Darstellung schneller und genauer vom Nutzer eingestellt werden kann. Die hervorgehobene Darstellung des Zieldrehzahlwerts kann beispielsweise durch vergrößerte, andersfarbige, und/oder markierte Darstellung der Zieldrehzahl realisiert sein. Gemäß einem weiteren Aspekt besteht die Möglichkeit, dass sich die hervorgehobene Darstellung des Zieldrehzahlwerts verändert, wenn eine angeforderte Drehzahl des Nebenabtriebs dem Zieldrehzahlwert entspricht. Hierbei sollen auch Ausführungsvarianten umfasst sein, bei denen sich die hervorgehobene Darstellung des Zieldrehzahlwerts verändert, wenn eine angeforderte Drehzahl dem Zieldrehzahlwert des Nebenabtriebs im Wesentlichen entspricht, z. B. wenn eine vom Nutzer oder vom Nebenabtrieb vorgegebene Drehzahlanforderung betragsmäßig um nicht mehr als einen vorbestimmten Schwellenwert vom Zieldrehzahlwert abweicht.

Beispielsweise kann ein Markierungselement an der Stelle der Drehzahlskala angezeigt werden, die dem Zieldrehzahlwert entspricht. Das Markierungselement kann seinen Zustand, z. B. seine Farbe, ändern, wenn die angeforderte Nebenabtriebsdrehzahl den Zieldrehzahlwert erreicht. Insbesondere kann das Markierungselement zwei unterschiedliche Anzeigezustände aufweisen, nämlich einen ersten Anzeigezustand, der angezeigt wird, wenn die angeforderte Nebenabtriebsdrehzahl sich vom Zieldrehzahlwert unterscheidet, und einen zweiten, hiervon unterschiedlichen Anzeigezustand, der angezeigt wird, wenn die angeforderte Nebenabtriebsdrehzahl auf den Zieldrehzahlwert eingestellt wurde. Die beiden unterschiedlichen Anzeigezustände können durch unterschiedliche Farben des Markierungselements realisiert sein. Beispielsweise kann das Markierungselement zur Markierung der Zieldrehzahl im ersten Anzeigezustand in einer ersten Farbe angezeigt werden. Wenn die angeforderte Nebenabtriebsdrehzahl den Zieldrehzahlwert erreicht, ändert sich die Farbe des Markierungselements, das dann im zweiten Anzeigezustand angezeigt wird. Wenn die angeforderte Nebenabtriebsdrehzahl von der Bedienperson wieder verändert wird, so dass sie nicht mehr der Zieldrehzahl entspricht, ändert sich der Anzeigezustand des Markierungselements wieder zurück zur ersten Farbe. Auf diese Weise kann die Bedienperson leicht erfassen, ob die Zieldrehzahl angesteuert wurde oder nicht.

Die angeforderte Nebenabtriebsdrehzahl ist beispielsweise eine Drehzahl, die eine Bedienperson, z. B. der Fahrer, über entsprechende Bedienelemente, z. B. "+" und "-"-Tasten am Multifunktionslenkrad, einstellen kann oder die ein Nebenabtriebsaufbau vorgibt.

Der Zieldrehzahlwert kann im Fahrzeug abgespeichert sein. Ferner kann das Fahrzeug eine Eingabemöglichkeit vorsehen, über die eine Bedienperson diese Zieldrehzahl verändern kann und den veränderten Wert abspeichern kann. Ferner kann ein Bedienelement vorgesehen sein, dessen Betätigung dazu führt, dass der Zieldrehzahlwert sofort angefahren wird.

Eine weitere Möglichkeit der erfindungsgemäßen Realisierung sieht vor, dass die Steuereinrichtung ausgebildet ist, bei aktiviertem Nebenabtrieb eine Zusatzinformation betreffend den Nebenabtrieb anzuzeigen, wobei die Zusatzinformation benachbart oder überlappend zu einer Skala zur Anzeige der aktuellen Drehzahl angezeigt wird. Bei der Zusatzinformation kann es sich beispielsweise um die Information handeln, dass der Nebenabtrieb aktiv ist, so dass der Nutzer darauf hingewiesen wird, dass die dargestellte Drehzahl zum Einstellen der Drehzahl des Nebenabtrieb verwendet werden kann.

Hierbei kann die angezeigte bzw. eingeblendete Zusatzinformation derart dargestellt werden, dass sie einen auf der Anzeigefläche unteren oder einen oberen Teilbereich des dargestellten Drehzahlbereichs überblendet. Bei dem unteren oder oberen Teilbereich handelt es sich vorzugsweise um einen Drehzahlbereich, der für den Betrieb des Nebenabtriebs nicht verwendet wird, so dass dieser Bereich platzsparend zur Anzeige von Zusatzinformationen verwendet werden kann.

Bei der Drehzahl, die auf der Anzeigefläche bei aktivierten Nebenabtrieb angezeigt wird, kann es sich um die Motordrehzahl handeln, oder um eine davon unterschiedliche Nebenabtriebsdrehzahl, falls der Nebenabtrieb beispielsweise getriebeseitig und nicht motorseitig vorgesehen ist.

Ferner besteht die Möglichkeit, dass die Steuereinrichtung ausgebildet ist, bei aktiviertem Nebenabtrieb versetzt zu einer Skala zur Anzeige der aktuellen Motordrehzahl eine weitere Skala zur Anzeige der aktuellen Nebenabtriebsdrehzahl anzuzeigen. Dies ist insbesondere dann vorteilhaft, wenn der Nebenabtrieb getriebeseitig vorgesehen ist.

Vorstehend wurde bereits erwähnt, dass die Anzeigefläche ein Bildschirm eines Kombi-Instruments ist, auf dem die Darstellung der Drehzahl als virtuelles Instrument dargestellt wird, d. h. digital dargestellt wird.

Hierbei kann die Drehzahlanzeige als virtuelles Rundinstrument dargestellt sein, das innerhalb eines Skalenrings bzw. Skalenteilrings eine gekrümmte Skala oder Rundskala aufweist, mit Werten die die unterschiedlichen Drehzahlwerte repräsentieren. Ein virtueller Zeiger des Rundinstruments zeigt dann auf den Skalenwert, der der aktuellen Drehzahl entspricht. Der Begriff "Rundinstrument" soll auch eine Darstellung des Drehzahlmessers als Halbrundinstrument, z. B. in Form eines Teilkreises, oder allgemein gekrümmte Skalen in Kombination mit einem Zeiger, der auf den aktuellen Geschwindigkeitswert oder Drehzahlwert zeigt, umfassen.

Gemäß diesem Aspekt kann die Steuereinrichtung ausgebildet sein, bei aktiviertem Nebenabtrieb, der im Stand des Fahrzeugs betrieben wird, den Zeiger auszublenden. Damit wird dem Fahrer auf intuitive Weise signalisiert, dass die Drehzahlanzeige momentan nicht zur Überwachung des Fahrbetriebs, sondern zur Überwachung des Betriebs des Nebenabtriebs eingestellt ist. Anstatt des Zeigers kann ein anderes, davon unterschiedliches Anzeigeelement, das entlang und angrenzend zur Skala darstellbar ist, den aktuellen Drehzahlwert des Nebenabtriebs signalisieren. Gemäß einer alternativen Ausführungsform kann zur Darstellung der aktuellen Drehzahl eine Langfeldskala angezeigt werden. Mit anderen Worten ist bei dieser Variante die Drehzahlanzeige als Langfeldskala dargestellt, auch bezeichnet als Balkenanzeige oder Banddrehzahlmesser. Die Langfeldskala kann hierbei gerade oder bogenförmig gekrümmt sein. Eine Langfeldskala bietet den Vorteil, dass sie weniger Anzeigeplatz beansprucht. Hierbei ist eine Anordnung besonders vorteilhaft, bei der sich die Langfeldskala zur Drehzahlanzeige in einem oberen oder unteren Bereich eines Bildschirms des Kombi-Instruments befindet, vorzugsweise in einem oberen oder unteren mittigen Bereich eines Bildschirms des Kombi-Instruments.

Eine weitere Möglichkeit der erfindungsgemäßen Realisierung sieht ferner vor, dass die Darstellung der Drehzahl auf der Anzeigefläche mittels einer Eingabeeinrichtung von einem Nutzer parametrisierbar und insbesondere personalisierbar ist. Anpassungsmöglichkeiten umfassen hierbei die Größe der Zahlen, die Farbigkeit, Kontraste, Darstellungsformen (beispielsweise klassischer Zeiger, Markierung durch Klammern etc.) oder das Skalenformat, die vom Fahrer nach Wunsch angepasst werden können.

Die Erfindung betrifft ferner ein Kraftfahrzeug mit einem Nebenabtrieb und einer Anzeigevorrichtung wie in diesem Dokument beschrieben. Das Kraftfahrzeug kann insbesondere ein Nutzfahrzeug, beispielsweise ein Lastkraftwagen, sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
Figur 1A eine Anzeigevorrichtung gemäß einer Ausführungsform die nicht der Erfindung entspricht;
Figur 1B eine Anzeigevorrichtung gemäß einer weiteren Ausführungsform die nicht der Erfindung entspricht;
Figur 2 eine erste Darstellung der Drehzahl mittels einer Langfeldskala bei deaktiviertem Nebenabtrieb;
Figur 3A eine zweite Darstellung der Drehzahl mittels einer Langfeldskala bei aktiviertem Nebenabtrieb;
Figur 3B eine alternative zweite Darstellung der Drehzahl mittels einer Langfeldskala bei aktiviertem Nebenabtrieb;
Figur 4A eine erste Darstellung der Drehzahl mittels einer Rundskala bei deaktiviertem Nebenabtrieb;
Figur 4B eine zweite Darstellung der Drehzahl mittels einer Rundskala bei aktiviertem Nebenabtrieb;
Figur 5A eine dritte die Erfindung zeigende Darstellung der Drehzahl mittels einer Rundskala bei aktiviertem Nebenabtrieb; und
Figur 5B eine vierte die Erfindung zeigende Darstellung der Drehzahl mittels einer Rundskala bei aktiviertem Nebenabtrieb.

Gleiche oder funktional äquivalente Elemente sind in allen Figuren mit denselben Bezugszeichen bezeichnet und sind zum Teil nicht gesondert beschrieben.

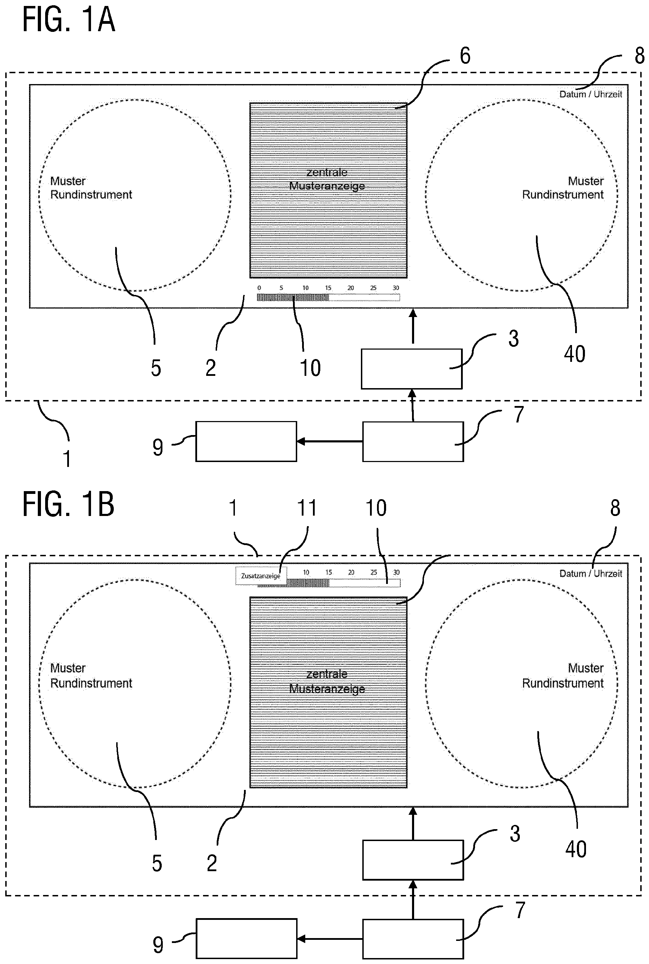

Figur 1A zeigt schematisch eine Anzeigevorrichtung 1 gemäß einer Ausführungsform. Die Anzeigevorrichtung ist als Kombi-Instrument ausgeführt, das als Anzeigefläche 2 einen großen Bildschirm besitzt. Die Anzeigevorrichtung 1 umfasst ferner eine mit der Anzeigefläche 2 gekoppelte Steuereinrichtung 3 zum Steuern einer Anzeige von Informationen auf der Anzeigefläche 2. Die Steuereinrichtung 3 steht in Kommunikationsverbindung mit einer Motorsteuerung 7, z. B. über einen Fahrzeug-Datenbus. In Figur 1 ist ferner schematisch ein über einen Verbrennungsmotor (nicht dargestellt) antreibbarer Nebenabtrieb 9 (engl. power take-off (PTO)) des Kraftfahrzeugs dargestellt, der von einem Nutzer des Kraftfahrzeugs zu- oder eingeschaltet werden kann. Die Darstellung auf der Anzeigefläche 2 kann über die Steuereinrichtung 3 gesteuert und je nach Fahrsituation und Betriebsmodus des Fahrzeugs angepasst werden.

Figur 1A zeigt eine beispielhafte Aufteilung der Anzeigenfläche 2, auf der zwei virtuelle Rundinstrumente 40 und 5 und dazwischen in einem mittleren Zentralbereich 6 ein weiterer Anzeigebereich 6 vorgesehen ist, indem beispielsweise Informationen eines Navigationsgeräts oder Werte vom Fahrzeugbetriebsparametern oder die Umgebung betreffend dargestellt werden können. Lediglich beispielhaft ist ferner oben rechts ein weiterer Anzeigebereich 8 vorgesehen, der zur Datums- und Uhrzeitanzeige verwendet wird.

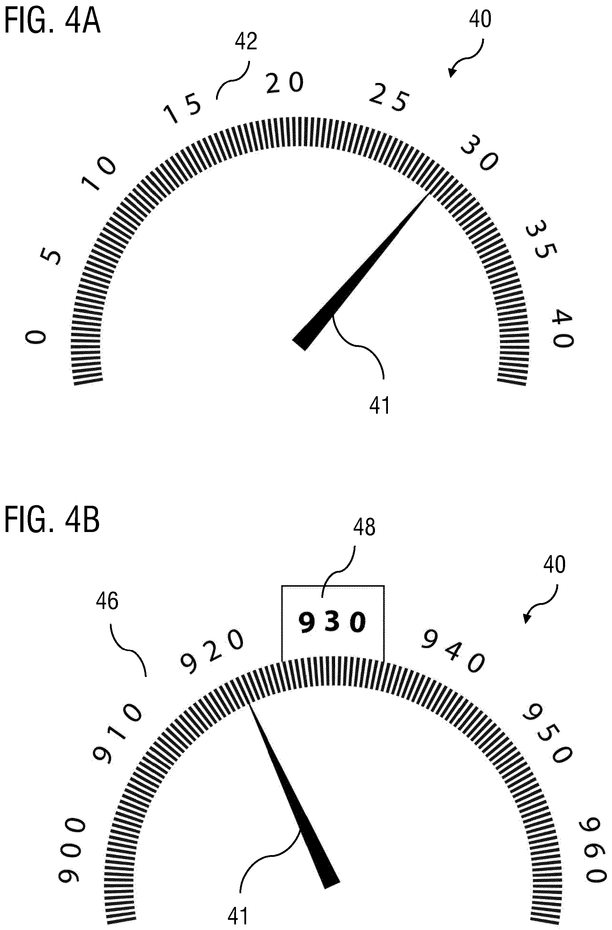

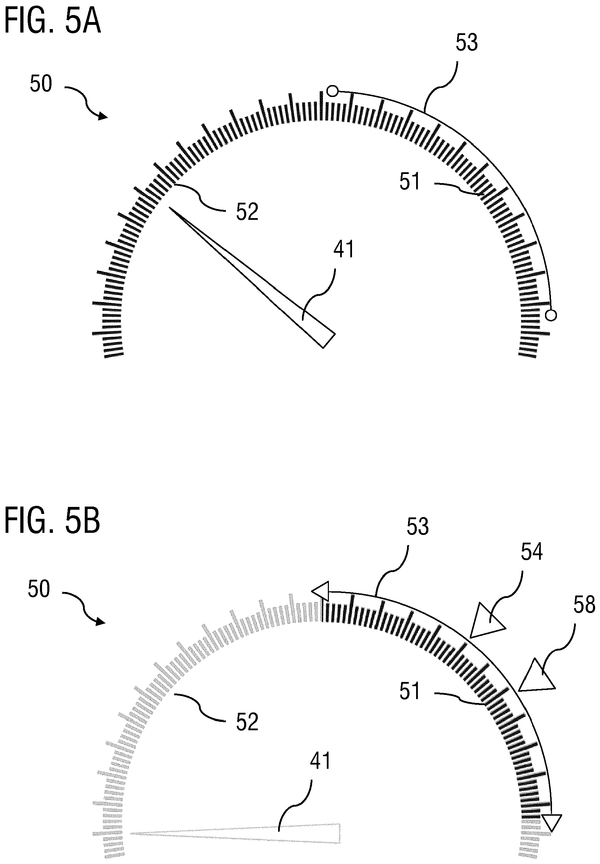

Eines der Rundinstrumente 40, 5 kann beispielsweise zur Darstellung eines virtuellen Tachometers bzw. Geschwindigkeitsmessers verwendet werden. Das andere Rundinstrument kann beispielsweise zur Ausbildung einer virtuellen Drehzahlanzeige in Form eines virtuellen (Halb-)Rundinstruments verwendet werden, wie dies beispielsweise in den Figuren 4 und 5 dargestellt ist.

In Figur 1A ist die Drehzahlanzeige jedoch in Form einer virtuellen Langfeldskala (Balkenanzeige) 10 dargestellt. Die Darstellung der Drehzahl als Langfeldskala 10 beansprucht besonders wenig Platz auf der Anzeigefläche 4 und kann beispielsweise unterhalb des mittleren Zentralbereichs 6 angeordnet sein. In diesem Fall könnte auch eines der Rundinstrumente 4 oder 5 entfallen und der dadurch freiwerdende Platz anderweitig genutzt werden. Falls die Drehzahlanzeige als Rundinstrument 40 wie in den Figuren 4 und 5 dargestellt realisiert ist, kann die Anzeige als Langfeldskala 10 entfallen.

Figur 1B zeigt eine alternative Ausführung, bei der die Langfeldskala 10 oberhalb des mittleren Zentralbereich 6 angeordnet ist.

Die Darstellung 10 der Drehzahl auf der Anzeigefläche 2 wird von der Steuereinrichtung 3 in Abhängigkeit von einem Betriebszustand des Nebenabtriebs 9 des Kraftfahrzeugs verändert. Insbesondere ist die Steuereinrichtung 3 eingerichtet, zu überwachen, ob der Nebenabtrieb 9 aktiviert oder deaktiviert ist. Bei Aktivierung des Nebenabtriebs, wenn dieser beispielsweise von einem Nutzer zu- oder eingeschaltet wird, ändert die Steuereinrichtung 3 die Darstellung 10 der Drehzahl auf der Anzeigefläche 2.

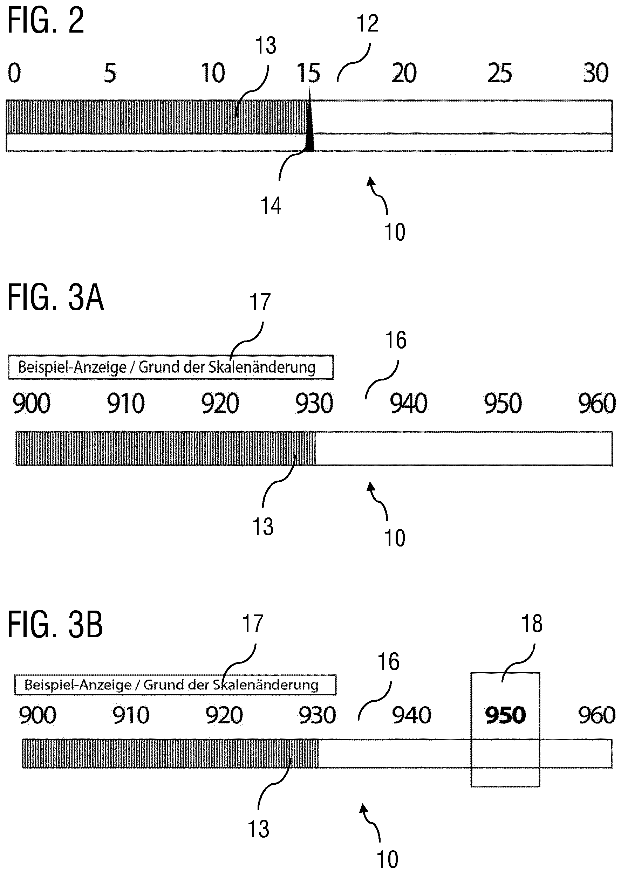

Dies ist in den Figuren 2, 3a und 3b illustriert. Diese Figuren zeigen wieder eine Ausführungsform bei der die Drehzahlanzeige als Langfeldskala 10 ausgeführt ist. Die Langfeldskala 10 wird auf der Anzeigefläche 2 als virtueller Drehzahlmesser eingeblendet, d h. es handelt sich nicht um einen analogen Drehzahlmesser. Hierbei gibt die Skala 12 die möglichen Werte 0 bis 30 an, was die Drehzahlen von 0 U/min bis 3000 U/min repräsentieren soll. Die Größe des Balkens 13 zeigt den aktuellen Wert der Drehzahl, hier 1500 U/min. Der aktuelle Drehzahlwert wird ferner durch einen Zeiger 14 hervorgehoben.

Erkennt nun die Steuereinrichtung 3, dass der Nebenabtrieb des Kraftfahrzeugs zugeschaltet wurde, ändert die Steuereinrichtung 3 die Skala zur Anzeige der aktuellen Drehzahl, was in Figur 3A beispielhaft dargestellt ist. Die geänderte Skala 16 weist nun Werte von 900 bis 960 auf, die Drehzahlen von 900 bis 960 U/min repräsentieren sollen. Ferner ist im unteren Bereich der Drehzahlanzeige eine Zusatzanzeige 17 eingeblendet, die beispielsweise den Grund der Skalenänderung erläutert.

In Figur 3B ist eine alternative angepasste Drehzahlanzeige bei aktiviertem Nebenabtrieb dargestellt. Die Besonderheit dieser Variante liegt darin, dass zusätzlich zu der Anpassung der Drehzahlskala noch ein Zieldrehzahlwert, hier 950, hervorgehoben dargestellt ist, beispielsweise durch Umrahmung und eine fette Schrift 18. Es wird somit eine situativ angepasste Änderung der Drehzahlanzeige ermöglicht, bei der beispielsweise eine Skalierungs-änderung der Drehzahlanzeige bei Anschluss eines Nebenabtriebs eine genaue Überwachung und Einstellung der Drehzahl des Nebenabtriebs ermöglicht, indem der Solldrehzahlbereich des Nebenabtriebs bei aktiviertem Nebenabtrieb stark vergrößert dargestellt wird. Figuren 4A und 4B zeigen eine alternative Ausführungsform bei der die Anzeige der Drehzahl als virtuelles Rundinstrument auf der Anzeigefläche 2 realisiert ist. In Figur 4A ist wieder eine erste Skalierung 42 der Drehzahlanzeige 40 dargestellt, wobei nun eine Rundskala verwendet wird. Die Rundskala 42 gibt die Werte von 0 bis 40 an, was die Drehzahlwerte 0 U/min bis 4000 U/min repräsentieren soll. Der virtuelle Zeiger 41 des Rundinstruments zeigt hier jeweils den Skalenwert auf, der dem aktuellen Drehzahlwert entspricht. Die Darstellung in Figur 41 zeigt die Situation bei nicht zugeschalteten Nebenabtrieb. Wenn der Nebenabtrieb 9 nun zugeschaltet wird, ändert sich die Skala wie in Figur 4B dargestellt. Die Skala 46 zeigt nun nur noch Werte von 900 bis 960 an, was Drehzahlwerte von 900 bis 960 U/min darstellen soll. Auch hier zeigt der virtuelle Zeiger 41 wiederrum auf den Skalenwert, der dem aktuellen Drehzahlwert entspricht. Auch hier wird ein Zieldrehzahlwert 48, hier der Wert 930, hervorgehoben dargestellt, damit der Nutzer intuitiv weiß, auf welchen Wert er die Drehzahlen, beispielsweise über Betätigung des Gaspedals, einstellen muss, um den Nebenabtrieb mit dem gewünschten Zieldrehzahlwert betrieben zu können.

Die Figuren 5A und 5B zeigen der Erfindung entsprechende Ausführungsformen, bei denen die Anzeige der Drehzahl wiederum als virtuelles Rundinstrument 50 auf der Anzeigefläche 2 realisiert ist. Es ist jeweils der Zustand der Drehzahlanzeige bei aktiviertem Nebenabtrieb gezeigt.

Die Drehzahlskala umfasst einen Teilbereich 51, der einem vorbestimmten Solldrehzahlbereich für den Nebenabtrieb entspricht, und einen Teilbereich 52, der nicht dem vorbestimmten Solldrehzahlbereich für den Nebenabtrieb entspricht. Sobald der Nebenabtrieb des Kraftfahrzeugs aktiviert wird, wird im virtuellen Rundinstrument eine visuelle Hervorhebung 53 des Solldrehzahlbereichs 51 des Nebenabtriebs eingeblendet. Die visuelle Hervorhebung erfolgt hier beispielhaft anhand einer eingeblendeten Bogenlinie, die sich entlang der Drehzahlskala erstreckt, jedoch nur entlang derjenigen Skalenwerte, die dem Solldrehzahlbereich 51 des Nebenabtriebs entsprechen. Bei deaktiviertem Nebenabtrieb ist die Hervorhebung 53 ausgeblendet. Auf diese Weise erkennt der Nutzer sofort, ob der Nebenabtrieb im Solldrehzahlbereich oder außerhalb, wie in Figur 5A dargestellt ist, betrieben wird.

Figur 5B zeigt eine weitere Variante. Hier wird wiederum bei Aktivierung des Nebenabtriebs der Solldrehzahlbereich 51 des Nebenabtriebs eingeblendet. Ferner wird bei aktiviertem Nebenabtrieb der Teilbereich 52, der nicht dem vorbestimmten Solldrehzahlbereich für den Nebenabtrieb entspricht, ausgeblendet oder zumindest abgedunkelt. Ferner kann der Zeiger 41 bei aktiviertem Nebenabtrieb ebenfalls ausgeblendet werden. Stattdessen wird die aktuelle Drehzahl mittels eines ersten Anzeigesymbols 54 markiert, hier z. B. mittels eines Dreiecks.

Das Anzeigesymbol 54 ist in Abhängigkeit vom aktuellen Drehzahlwert entlang und angrenzend zur Skala 51 verfahrbar. Ein vorgebbarer Zieldrehzahlwert 58 für den Nebenabtrieb kann ebenfalls durch ein weiteres Anzeigesymbol 54 gekennzeichnet werden. Die Anzeigesymbole 54 und 58 unterscheiden sich vorzugsweise in ihrer Form und/oder Farbe.

### Bezugszeichenliste

- 1: Anzeigevorrichtung
- 2: Anzeigefläche
- 3: Steuereinrichtung
- 4: Rundinstrument
- 5: Rundinstrument
- 6: Zentrale Anzeigebereich
- 7: Motorsteuerung
- 8: Anzeige Bereich für Datum und Uhrzeit
- 9: Nebenabtrieb
- 10: Darstellung der Drehzahl als Langfeldskala
- 11: Zusatzanzeige
- 12: Langfeldskala
- 13: Balken
- 14: Zeiger
- 16: Langfeldskala bei aktivierten Nebenabtrieb
- 17: Zusatzanzeige
- 18: Hervorhebung der Zieldrehzahl
- 40: Darstellung der Drehzahl als Rundskala, z. B. virtuelles Rundinstrument
- 41: Zeiger
- 42: Rundskala
- 46: Rundskala bei aktivierten Nebenabtrieb
- 48: Hervorhebung der Zieldrehzahl
- 50: Darstellung der Drehzahl als Rundskala, z. B. virtuelles Rundinstrument
- 51: Teilbereich der Drehzahlskala
- 52: Teilbereich der Drehzahlskala
- 53: Hervorhebung eines Solldrehzahlbereichs
- 54: Markierung (Anzeigesymbol) Hervorhebung der aktuellen Drehzahl
- 58: Markierung (Anzeigesymbol) zur Hervorhebung der Zieldrehzahl

## Patentansprüche

1. Anzeigevorrichtung (1) zur Darstellung einer aktuellen Drehzahl eines Kraftfahrzeugs, insbesondere eines Nutzfahrzeugs, umfassend eine Anzeigefläche (2) und eine mit der Anzeigefläche (2) gekoppelte Steuereinrichtung (3) zum Steuern einer Anzeige von Informationen auf der Anzeigefläche (2), **wobei** die Steuereinrichtung (3) ausgebildet ist, die Darstellung (10; 40) der Drehzahl auf der Anzeigefläche (2) in Abhängigkeit von einem Betriebszustand eines Nebenabtriebs (9) des Kraftfahrzeugs zu verändern, **dadurch gekennzeichnet, dass** die Steuereinrichtung (3) ausgebildet ist, bei aktiviertem Nebenabtrieb einen ersten Teilbereich (51) einer Skala zur Anzeige der aktuellen Drehzahl, der einem vorbestimmten Solldrehzahlbereich für den Nebenabtrieb entspricht, visuell hervorgehoben darzustellen.

2. Anzeigevorrichtung (1) nach Anspruch 1, **dadurch gekennzeichnet, dass** die Steuereinrichtung (3) ausgebildet ist, die Darstellung (10; 40) der Drehzahl auf der Anzeigefläche zu verändern, wenn der Nebenabtrieb (9) aktiviert wird, beispielsweise zu- oder eingeschaltet wird.

3. Anzeigevorrichtung (1) nach Anspruch 1 oder 2, **dadurch gekennzeichnet, dass** die Steuereinrichtung (3) ausgebildet ist, bei aktiviertem Nebenabtrieb die Skalierung einer Skala (12, 16; 42; 46) zur Anzeige der aktuellen Drehzahl zu verändern, insbesondere derart, dass ein Solldrehzahlbereich des Nebenabtriebs bei aktiviertem Nebenabtrieb vergrößert dargestellt ist.

4. Anzeigevorrichtung (1) nach Anspruch 1, **dadurch gekennzeichnet, dass** der erste Teilbereich dadurch hervorgehoben dargestellt wird,
a) dass ein zweiter Teilbereich (52) der Skala, der nicht dem vorbestimmten Solldrehzahlbereich für den Nebenabtrieb entspricht; ausgeblendet oder abgedunkelt wird; und/ oder
b) dass der erste Teilbereich (51) im Vergleich zum zweiten Teilbereich (52) heller und/oder in einer anderen Farbe dargestellt wird.

5. Anzeigevorrichtung (1) nach einem der vorhergehenden Ansprüche, **dadurch gekennzeichnet, dass** die Steuereinrichtung (3) ausgebildet ist, bei aktiviertem Nebenabtrieb (9) einen Zieldrehzahlwert für den Nebenabtrieb (9) hervorgehoben darzustellen, beispielsweise durch vergrößerte, andersfarbige, und/oder markierte Darstellung der Zieldrehzahl (18; 48; 58).

6. Anzeigevorrichtung nach Anspruch 5, **dadurch gekennzeichnet, dass** sich die hervorgehobene Darstellung des Zieldrehzahlwerts verändert, wenn eine aktuelle Drehzahl dem Zieldrehzahlwert entspricht und/oder betragsmäßig nicht mehr als ein vorbestimmter Schwellenwert vom Zieldrehzahlwert abweicht.

7. Anzeigevorrichtung (1) nach einem der vorhergehenden Ansprüche, **dadurch gekennzeichnet, dass** die Steuereinrichtung (3) ausgebildet ist, bei aktiviertem Nebenabtrieb (9) eine Zusatzinformation (17) betreffend den Nebenabtrieb (9) anzuzeigen, wobei die Zusatzinformation (17) benachbart oder überlappend zu einer Skala (16) zur Anzeige der aktuellen Drehzahl angezeigt wird.

8. Anzeigevorrichtung (1) nach Anspruch 7, **dadurch gekennzeichnet, dass** die eingeblendete Zusatzinformation (17) derart dargestellt wird, dass sie einen auf der Anzeigefläche (2) unteren oder einen oberen Teilbereich des dargestellten Drehzahlbereichs überblendet.

9. Anzeigevorrichtung (1) nach einem der vorhergehenden Ansprüche, **dadurch gekennzeichnet, dass** die Steuereinrichtung (3) ausgebildet ist, bei aktiviertem Nebenabtrieb versetzt zu einer Skala zur Anzeige der aktuellen Motordrehzahl eine weitere Skala zur Anzeige der aktuellen Nebenabtriebsdrehzahl anzuzeigen.

10. Anzeigevorrichtung (1) nach einem der vorhergehenden Ansprüche, **dadurch gekennzeichnet, dass** die Anzeigefläche (2) ein Bildschirm eines Kombi-Instruments ist, auf dem die Darstellung der Drehzahl als virtuelles Instrument (10; 40) dargestellt wird.

11. Anzeigevorrichtung (1) nach einem der vorhergehenden Ansprüche, **dadurch gekennzeichnet, dass** die Steuereinrichtung (3) ausgebildet ist, zur Darstellung der aktuellen Drehzahl ein digitales Rundinstrument (40; 50) zu verwenden, aufweisend eine gekrümmte Drehzahlskala, insbesondere eine Rundfeldskala oder Halbrundfeldskala, und einen drehbaren Zeiger (41), dessen Position auf der Drehzahlskala den aktuellen Drehzahlwert angibt.

12. Anzeigevorrichtung (1) nach Anspruch 11, **dadurch gekennzeichnet, dass** die Steuereinrichtung (39) ausgebildet ist, bei aktiviertem Nebenabtrieb, der im Stand des Fahrzeugs betrieben wird, den Zeiger (41) auszublenden.

13. Anzeigevorrichtung nach einem der vorhergehenden Ansprüche, **dadurch gekennzeichnet, dass** zur Darstellung der aktuellen Drehzahl eine Langfeldskala (12, 16) angezeigt wird.

14. Anzeigevorrichtung nach Anspruch 13, **dadurch gekennzeichnet, dass** sich die Langfeldskala (12, 16) in einem oberen oder unteren Bereich eines Bildschirms (2) des Kombi-Instruments befindet.

15. Anzeigevorrichtung (1) nach einem der vorhergehenden Ansprüche, **dadurch gekennzeichnet, dass** die Darstellung der Drehzahl auf der Anzeigefläche mittels einer Eingabeeinrichtung von einem Nutzer parametrisierbar und insbesondere personalisierbar ist.

16. Nutzfahrzeug mit einem Nebenabtrieb (2), umfassend eine Anzeigevorrichtung (1) nach einem der vorhergehenden Ansprüche.

## Claims

1. A display device (1) for representing a current rotational speed of a motor vehicle, in particular of a utility vehicle, comprising a display area (2) and a control device (3) which is coupled to the display area (2) and has the purpose of controlling a display of information on the display area (2), wherein the control device (3) is designed to change the representation (10; 40) of the rotational speed on the display area (2) as a function of an operating state of a power take-off (9) of the motor vehicle, **characterized in that** the control device (3) is designed to represent in a visually highlighted fashion, when the power take-off is activated, a first region (51) of a scale for displaying the current rotational speed, which region corresponds to a predetermined setpoint rotational speed range for the power take-off.

2. The display device (1) according to Claim 1, **characterized in that** the control device (3) is designed to change the representation (10; 40) of the rotational speed on the display area if the power take-off (9) is activated, for example to connect it or switch it on.

3. The display device (1) according to Claim 1 or 2, **characterized in that** the control device (3) is designed to change, when the power take-off is activated, the scaling of a scale (12, 16; 42; 46) for displaying the current rotational speed, in particular in such a way that a setpoint rotational speed range of the power take-off is represented in an enlarged form when the power take-off is activated.

4. The display device (1) according to Claim 1, **characterized in that** the first region is represented in a highlighted fashion
a) **in that** a second region (52) of the scale, which does not correspond to the predetermined setpoint rotational region for the power take-off, is removed from the display or dimmed; and/or
b) **in that** the first region (51) is represented brighter and/or in a different colour in comparison with the second region (52).

5. The display device (1) according to one of the preceding claims, **characterized in that** the control device (3) is designed to represent in a highlighted fashion, when the power take-off (9) is activated, a target rotational speed value for the power take-off (9), for example by means of enlarged, differently coloured and/or marked representation of the target rotational speed (18; 48; 58).

6. The display device according to Claim 5, **characterized in that** the highlighted representation of the target rotational speed value changes if a current rotational speed corresponds to the target rotational speed value and/or does not differ in absolute terms from the target rotational speed value by more than a predetermined threshold value.

7. The display device (1) according to one of the preceding claims, **characterized in that** the control device (3) is designed to display additional information (17) relating to the power take-off (9) when the power take-off (9) is activated, wherein the additional information (17) is displayed in an adjacent or overlapping fashion with respect to a scale (16) for displaying the current rotational speed.

8. The display device (1) according to Claim 7, **characterized in that** the additional information (17) which is included in the display is represented in such a way that it is displayed on the display face (2), over a lower or an upper region of the represented rotational speed range.

9. The display device (1) according to one of the preceding claims, **characterized in that** the control device (3) is designed to display, when the power take-off is activated, a further scale for displaying the current power take-off rotational speed, at an offset with respect to a scale for displaying the current engine/motor rotational speed.

10. The display device (1) according to one of the preceding claims, **characterized in that** the display area (2) is a screen of a combination instrument on which the representation of the rotational speed is represented as a virtual instrument (10; 40).

11. The display device (1) according to one of the preceding claims, **characterized in that** the control device (3) is designed to use, for the representation of the current rotational speed, a digital round instrument (40; 50) having a curved rotational speed scale, in particular a round field scale or half-round field scale and a rotatable pointer (41) whose position on the rotational speed scale indicates the current rotational speed value.

12. The display device (1) according to Claim 11, **characterized in that** the control device (39) is designed to remove the pointer (41) from the display when the power take-off which is operated in the stationary state of the vehicle is activated.

13. The display device according to one of the preceding claims, **characterized in that** a long field scale (12, 16) is displayed for the representation of the current rotational speed.

14. The display device according to Claim 13, **characterized in that** the long field scale (12, 16) is located in an upper or lower region of a screen (2) of the combination instrument.

15. The display device (1) according to one of the preceding claims, **characterized in that** the representation of the rotational speed on the display area can be parametrized and in particular personalized by a user by means of an input device.

16. A utility vehicle having a power take-off (2), comprising a display device (1) according to one of the preceding claims.

## Revendications

1. Dispositif d'affichage (1) permettant de représenter une vitesse de rotation actuelle d'un véhicule automobile, en particulier d'un véhicule utilitaire, comprenant une surface d'affichage (2) et un dispositif de commande (3) couplé à la surface d'affichage (2) pour commander un affichage d'informations sur la surface d'affichage (2), dans lequel le dispositif de commande (3) est réalisé pour modifier la représentation (10 ; 40) de la vitesse de rotation sur la surface d'affichage (2) en fonction d'un état de fonctionnement d'une prise de force (9) du véhicule automobile, **caractérisé en ce que** le dispositif de commande (3) est réalisé, lorsque la prise de force est activée, pour représenter par une mise en valeur visuelle une première zone partielle (51) d'une échelle servant à afficher la vitesse de rotation actuelle et correspondant à une plage de vitesse de rotation nominale prédéterminée pour la prise de force.

2. Dispositif d'affichage (1) selon la revendication 1, **caractérisé en ce que** le dispositif de commande (3) est réalisé pour modifier la représentation (10 ; 40) de la vitesse de rotation sur la surface d'affichage lorsque la prise de force (9) est activée, par exemple lorsqu'elle est mise en circuit ou mise en marche.

3. Dispositif d'affichage (1) selon la revendication 1 ou 2, **caractérisé en ce que** le dispositif de commande (3) est réalisé, lorsque la prise de force est activée, pour modifier la graduation d'une échelle (12, 16 ; 42 ; 46) servant à afficher la vitesse de rotation actuelle, en particulier de telle sorte qu'une plage de vitesse de rotation nominale de la prise de force est agrandie dans la représentation lorsque la prise de force est activée.

4. Dispositif d'affichage (1) selon la revendication 1, **caractérisé en ce que** la représentation de la première zone partielle est mise en valeur,
a) **en ce qu'**une deuxième zone partielle (52) de l'échelle, qui ne correspond pas à la plage de vitesse de rotation nominale prédéterminée pour la prise de force, est supprimée ou rendue plus sombre ; et/ou
b) **en ce que** la représentation de la première zone partielle (51) est plus claire et/ou de couleur différente en comparaison avec la deuxième zone partielle (52).

5. Dispositif d'affichage (1) selon l'une quelconque des revendications précédentes, **caractérisé en ce que** le dispositif de commande (3) est réalisé, lorsque la prise de force (9) est activée, pour représenter par une mise en valeur une valeur de vitesse de rotation cible pour la prise de force (9), par exemple par une représentation agrandie, de couleur différente et/ou en surbrillance de la vitesse de rotation cible (18 ; 48 ; 58) .

6. Dispositif d'affichage selon la revendication 5, **caractérisé en ce que** la représentation mise en valeur de la valeur de vitesse de rotation cible varie si une vitesse de rotation actuelle correspond à la valeur de vitesse de rotation cible et/ou ne dévie pas de la valeur de vitesse de rotation cible de plus d'une valeur seuil prédéterminée.

7. Dispositif d'affichage (1) selon l'une quelconque des revendications précédentes, **caractérisé en ce que** le dispositif de commande (3) est réalisé, lorsque la prise de force (9) est activée, pour afficher une information supplémentaire (17) concernant la prise de force (9), les informations supplémentaires (17) étant affichées à côté de ou en chevauchement avec une échelle (16) servant à afficher la vitesse de rotation actuelle.

8. Dispositif d'affichage (1) selon la revendication 7, **caractérisé en ce que** l'information supplémentaire superposée (17) est représentée de telle sorte qu'elle recouvre une zone partielle, inférieure ou supérieure sur la surface d'affichage (2), de la plage de vitesse de rotation représentée.

9. Dispositif d'affichage (1) selon l'une quelconque des revendications précédentes, **caractérisé en ce que** le dispositif de commande (3) est réalisé, lorsque la prise de force est activée, pour afficher en décalage par rapport à une échelle servant à afficher la vitesse de rotation actuelle du moteur une échelle supplémentaire servant à afficher la vitesse de rotation actuelle de la prise de force.

10. Dispositif d'affichage (1) selon l'une quelconque des revendications précédentes, **caractérisé en ce que** la surface d'affichage (2) est un écran d'un instrument combiné sur lequel la représentation de la vitesse de rotation est illustrée sous la forme d'un instrument virtuel (10 ; 40).

11. Dispositif d'affichage (1) selon l'une quelconque des revendications précédentes, **caractérisé en ce que** le dispositif de commande (3) est réalisé pour utiliser un instrument numérique rond (40 ; 50) pour représenter la vitesse de rotation actuelle, qui présente une échelle de vitesse de rotation courbe, en particulier une échelle à champ circulaire ou une échelle à champ semi-circulaire, et une aiguille tournante (41) dont la position sur l'échelle de vitesse de rotation indique la valeur de vitesse de rotation actuelle.

12. Dispositif d'affichage (1) selon la revendication 11, **caractérisé en ce que** le dispositif de commande (39) est réalisé pour supprimer l'aiguille (41) lorsque la prise de force est activée et actionnée à l'arrêt du véhicule.

13. Dispositif d'affichage selon l'une quelconque des revendications précédentes, **caractérisé en ce qu'**une échelle à champ long (12, 16) est affichée pour représenter la vitesse de rotation actuelle.

14. Dispositif d'affichage selon la revendication 13, **caractérisé en ce que** l'échelle à champ long (12, 16) se trouve dans une zone supérieure ou inférieure d'un écran (2) de l'instrument combiné.

15. Dispositif d'affichage (1) selon l'une quelconque des revendications précédentes, **caractérisé en ce que** la représentation de la vitesse de rotation peut être paramétrée, en particulier personnalisée, par un utilisateur sur la surface d'affichage au moyen d'un dispositif de saisie.

16. Véhicule utilitaire doté d'une prise de force (2), comprenant un dispositif d'affichage (1) selon l'une quelconque des revendications précédentes.
